# EUROPEAN PATENT SPECIFICATION

(11) **EP 2 689 198 B1**
(45) Date of publication and mention of the grant of the patent: **02.05.2018**
(21) Application number: 12761181.2
(22) Date of filing: 23.03.2012
(51) Int. Cl.: F24H 9/12, F24H 9/20, F16K 11/22, F16K 15/18, F24D 3/10, F16K 1/04, F16K 1/52

(54) **IMPROVED COMBINATION VALVE**
VERBESSERTES KOMBINATIONSVENTIL
SOUPAPE COMBINÉE AMÉLIORÉE

(30) Priority: 24.03.2011 NO 20110452
(43) Date of publication of application: 29.01.2014
(73) Proprietor: Braathen, Thor Frølich, 3359 Eggedal (NO)
(72) Inventor: Braathen, Thor Frølich, 3359 Eggedal (NO)
(74) Representative: Protector IP Consultants AS
(86) International application number: PCT/NO2012/050050
(87) International publication number: WO 2012/128645

(56) References cited:
- WO-A1-2005/078359
- WO-A1-2005/078359
- WO-A1-2009/031994
- DE-A1- 10 312 527
- ES-A1- 2 322 315
- GB-A- 1 180 505
- NO-B1- 326 061
- NO-B1- 326 061
- US-A- 3 438 391

## Description

The present invention relates to valves for water heaters or plumbing and heating installations for dwellings and, more specifically, it relates to an improved combination valve including a stopcock and a check or non-return valve as disclosed in the preamble of claim 1.

According to regulations now in place, it is for safety purposes - in order to prevent backflow of water into the public water mains from the water heater - a requirement that there should be separate seats for the non-return valve and stopcock. One of the reasons for this is that whilst the stopcock is only closed manually at rare intervals, the non-return valve closes each time a tap in the dwelling is closed, and that wear on the two respective valve seats is therefore very different.

The present invention is an improvement over the applicant's combination valve as described in Norwegian Patent No. 326061, and concerns in particular the sealing surfaces for the stopcock function and non-return valve function of the combination valve.

Although the combination valve described in the aforementioned Norwegian patent functions well in general, it has some weaknesses in that when the stopcock function is activated, and when the water flows in towards the non-return valve piston, the annular gasket 16 arranged on the non-return valve piston sometimes blows off because the water penetrates under the gasket and the accompanying water pressure prises the gasket out of its groove.

In addition, more stringent requirements in Great Britain as regards the sealing of the non-return valve have caused problems when it comes to meeting these more stringent requirements.

GB 1180505 describes in one embodiment (figure 7 of the reference) a combination valve that has two sealing surfaces, whereby the radially innermost and most distal serves the non-return valve function and the radially outermost and most proximal serves the stopcock function of the valve. The gasket, which is attached to the seat of the valve housing, is shaped to have a lip that seals against the piston in the non-return closing position. When the piston is moved further against the gasket, the lip will bend radially outwardly until the piston bears against the outer part of the gasket. The lip is prone to wear and debris may collect in the gap between the lip and the outer part of the gasket. This may deteriorate the sealing function of the valve, both in the non-return sealing position and the stopcock position.

WO 2009/031994 also has a valve with two sealing seats, one for the non-return valve function, and one for the stopcock function. However, in this valve the non-return valve seat is arranged radially at a greater circumference than the stopcock sealing seat. This means that the area that the pressure is acting upon for the non-return valve will relatively large (assuming the same cross section of flow through the valve). A larger area for the pressure to act upon will reduce the pressure difference needed to lift the valve. This makes it difficult to meet the more stringent requirements with regard to overpressure.

The present invention solves the aforementioned problems by means of an improved combination valve as disclosed in the characterising clause of claim 1.

Advantageous embodiments of the invention are set forth in the dependent claims.

An advantageous embodiment of the combination valve according to the invention is described in more detail below, with reference to the attached drawings wherein:
Figure 1 is a sectional view of the improved combination valve with the stopcock spindle and the non-return valve piston in an open position;
Figure 2 is a sectional view of the improved combination valve in Fig. 1 with the stopcock spindle in an open position and the non-return valve piston in a closed position;
Figure 3 is a sectional view of the improved combination valve in Figs. 1 and 2 with the stopcock spindle and non-return valve piston in a closed position;
Figure 4 is a detailed view of the area framed by broken lines in Fig. 2; and
Figure 5 is a detailed view of the area framed by broken lines in Fig. 3.

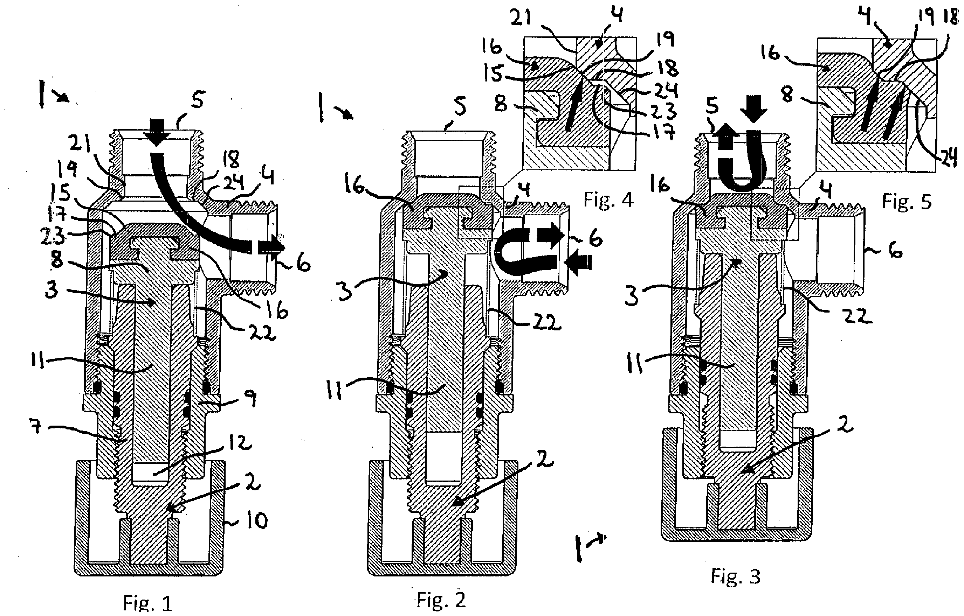

With reference to Figures 1 - 3, there is shown an advantageous embodiment of an improved combination valve 1 according to the present invention, including a stopcock 2 and a non-return valve 3. The combination valve 1 further includes a valve housing 4 in which there is arranged an inlet 5 for cold water from the public water mains and an outlet 6 from the valve 1 for connection to a non-illustrated water heater.

The water flow in the combination valve 1 is indicated by arrows in Figures 1 -3.

For the stopcock function of the combination valve 1, there is provided a stopcock spindle 7, and for the non-return valve function of the valve 1, there is provided a non-return valve piston 8. As can be seen from the aforementioned figures, the spindle 7 has external threads and is passed through a centrically arranged and internally threaded opening in an end plug 9, which end plug 9 is threadedly secured to the valve housing 4. To a first end of the spindle 7 there is further arranged a stopcock wheel 10 for operating the stopcock 2.

The non-return valve piston 8 is centrically arranged to a second end of the stopcock spindle 7. Furthermore, a centrically projecting shaft portion 11 of the piston 8 is slidably arranged in a centric blind hole 12 in said second end of the spindle 7 against the differential water pressure acting on the surface of the piston 8 and the force from a helical spring 22 disposed between the piston 8 and the end plug 9. More specifically, the spring 22 is advantageously disposed between an inner surface 13 of the end plug 9 which surrounds the spindle 7 and an annular spring seat 14 on the piston 8, such that when the stopcock 2 is operated, the portion of the spindle 7 at all times projecting from the surface 13 is thus moved axially within the spring 22.

The shaft portion 11 of the piston 8 is advantageously configured with a cruciform (not shown) cross-section, and the blind hole 12 in the spindle 7 is correspondingly configured for sliding receipt of the shaft 11.

At the opposite end of the shaft portion 11, the non-return valve piston 8 is further configured with a radially configured groove in which there is secured a cap-shaped rubber or elastomer gasket 16 with a planar, circular piston surface which goes over into a conical, rounded edge 15. The edge 15 goes over into an annular, planar sealing surface 17 for sealing against an essentially planar seat 18 arranged in the valve housing 4, and the planar sealing surface 17 goes over into a conical surface 23 for sealing against a conical seat 24 in the valve housing.

With reference in particular to Figures 4 and 5, an additional seat 19 is arranged in the valve housing 4 for sealing against the conical rounded edge 15 of the non-return valve piston 8. Seen in relation to a longitudinal centre axis of the spindle 7 and the piston 8, the seat 19 is arranged radially within the seat 24, the seat 19 advantageously forming or at least constituting a part of a conical constriction in a centric passage out to the inlet 5, which conical constriction in turn goes over into a cylindrical surface 21 closer to the inlet 5.

In Figures 4 and 5, pressure from the non-return valve piston 8 against the seats 19 and 24 is indicated by arrows. From the said figures, it can be seen that the first contact between the gasket 16 and the housing 4 takes place between the seats 15 and 19 (non-return valve function), that the next contact takes place between the seats 23 and 24 (the stop valve function), and that the last contact between the seats 17 and 18 advantageously takes place wholly or partly as a result of the change in volume and shape of the gasket 16 when it is pressed against the seats 19 and 24 in the housing 4, which further contributes to a secure sealing when the stopcock 2 is closed.

Figure 1 shows the stopcock 2 and non-return valve 3 of the combination valve 1 in an open position. The water is then able to flow unobstructed through the valve 1 from the inlet 5 to the outlet 6, as the situation would be when water is drawn in the dwelling. The pressure then falls on the outlet side of the valve 1, and the differential pressure between the inlet side and the outlet side which acts against the surface of the non-return valve piston 8 thus overcomes the force of the spring 22.

Figures 2 and 4 show the stopcock 2 and non-return valve 3 of the combination valve 1 in an open and closed position, respectively. The water will then be prevented from flowing back past the non-return valve piston 8, as is indicated by arrows in Figure 2, and as the situation will be when no water is being drawn in the dwelling. The differential pressure that arises when water is drawn will in this situation be compensated, and the force of the spring 22 presses the edge 15 of the gasket 16 on the non-return valve piston 8 into sealing contact with the seat 19 of the valve housing 4.

Figures 3 and 5 show the stopcock 2 of the combination valve 1 in a closed position. The water will then be prevented from flowing in through the inlet 5, as is indicated by arrows in Figure 3. In this situation, the stopcock spindle 7 has been manually screwed into the end plug 9 by operating the wheel 10, so that the shaft portion 11 of the non-return valve piston 8 is passed into the blind hole 12 to the maximum extent and a surface of the piston 8 radially surrounding the shaft portion 11 is brought into contact with the aforementioned second end of the spindle 8 against the force of the spring 22. The spring 22 will thus in this situation be compressed to the maximum, and the piston 8 will move as a mere extension of the spindle 7. The stopcock 2 thus overrides the non-return valve 7, and from Figure 5 in particular it can be seen that the gasket 16 in this situation is pressed into a more compressed configuration which permits sealing contact between the sealing surfaces 17 and 23 on the gasket 16 of the piston 8 and the seats 18 and 24 of the valve housing, respectively.

The stopcock 2 and the non-return valve 3 thus seal in separate seats, as the regulations prescribe, and do so in a particularly compact and advantageous manner. In addition, a double seal is obtained when the stopcock 2 is closed. The same is true also for the combination valve shown and described in Norwegian Patent No. 326061. However, compared with the combination valve in Norwegian Patent No. 326061, the seats for the stopcock function and non-return valve function of the combination valve, put rather simply, have switched places, as it is the seat 19 for the non-return valve function of the combination valve 1 that is arranged further from the non-return valve piston 8 along the longitudinal axis thereof than the seat 24 for the stopcock function of the combination valve 1, and where the sealing circumference for the non-return valve function is thus reduced substantially compared with the corresponding sealing circumference for the combination valve shown in Norwegian Patent No. 326061 with otherwise similar dimensions of the non-return valve piston 8. The reduced sealing circumference compared with earlier allows the more stringent requirements in Great Britain (sealing at 0.15 bar overpressure on one side of the piston as opposed to the earlier 0.25 bar at a pressure of 5 bar on the other side of the piston) to be met.

In that the valve housing 4 seats 19 and 24 are conical (or inclined as shown in section), the cap-shaped gasket 16 will be "squeezed" in towards its centre which prevents it from loosening from or blowing off the non-return valve piston 8.

The tolerances for the valve 1, and in particular for the sliding fit between the non-return valve piston 8 shaft portion 11 and the centric blind hole 12 are preferably so small that a uniform and proper contact is provided between the respective contact faces on the non-return valve piston 8 and the valve housing 4. This is to prevent inadequate sealing in the combination valve 1 and unnecessary wear of its contact faces 15, 17, 18, 19, 23 and 24. The fact that the shaft portion 11 has a cruciform cross-section prevents further rotation of the shaft portion in the blind hole 12 and thus also of the non-return valve piston 8, which further prevents unnecessary wear between the respective contact faces. In that the shaft portion 11 and the blind hole 12 in addition are longer than their equivalents shown in Norwegian Patent No. 326061 permits an improved linear control of the non-return valve piston 8 and thus correct contact between the respective contact faces. Both the cruciform cross-section and the increased length of the shaft portion 11 are advantageously permitted in that the stopcock spindle 7 of the improved combination valve 1 has a substantially larger outer diameter than the stopcock spindle shown in Norwegian Patent No. 326061.

The non-return valve piston 8 and the stopcock spindle 7 are advantageously made of PPS plastic with a 30% admixture of glass, which is able to withstand 200°C, whilst the end plug 9 is advantageously of PES plastic, also with 30% admixture of glass, and which can withstand 180°C. If the water temperature in the combination valve 1 were, by mistake, to exceed 240°C, the end plug would then melt and prevent explosion in the connected water heater or in the combination valve 1, for example, if a thermostat or safety valve were to fail.

## Claims

1. A combination valve (1) for a water heater or plumbing and heating installation for a dwelling, which combination valve (1) includes a valve housing (4), a stopcock (2) with a stopcock spindle (7), a non-return valve (3) with a non-return valve piston (8), an inlet (5) and an outlet (6), which stopcock spindle (7) and which non-return valve piston (8) are centrically arranged along a common longitudinal axis of the valve (1), wherein the non-return valve has a gasket (16) between the piston (8) and the valve housing (4); the piston (8) is spring-actuated (22) for sealing contact with a first seat (19), serving a non-return valve function, in the valve housing (4) and the stopcock spindle (7) is threadedly received through an opening in the valve housing (4) or a part (9) attached thereto for sealing contact between the non-return valve piston (8) and a second seat (24), serving a stopcock function, in the valve housing (4), and which first and second seats (19, 24) define a passage to the inlet (5) of the valve (1), the non-return valve piston (8) being centrically and slidably along the longitudinal axis arranged to an end of the stopcock spindle (7) for sealing contact between the non-return valve piston (8) and the first seat (19) in a closed position of the non-return valve (3) and, in addition, for sealing contact between the non-return valve piston (8) and the second seat (24) in a closed position of the stopcock (2) in which the gasket (16) is more compressed between the piston (8) and the seat (18) than in the closed position for only the non-return valve (3), the first seat (19) being arranged further from the non-return valve piston (8) along the longitudinal axis than the second seat (24) and the first seat (19) being arranged radially within the second seat (24) in relation to the centric longitudinal axis, the gasket (16) being attached to the piston (8), **characterised in that** at the opposite end of the shaft portion (11) the non-return valve piston (8) is configured with a radially arranged groove in which the gasket (16) is secured, the gasket (16) being cap-shaped, with a planar, circular piston face that goes over into a conical, rounded edge (15) for sealing against the seat (19), and which edge (15) goes over into an annular, planar sealing surface (17) for sealing against the seat (18) arranged in the valve housing (4), and which planar sealing surface (17) further goes over into a conical surface (23) for sealing against the seat (24) arranged in the valve housing (4).

2. A combination valve according to claim 1, **characterised in that** an along the longitudinal axis centrically projecting shaft portion (11) of the non-return valve piston (8) is slidably arranged in a centric blind hole (22) in the end of the stopcock spindle (7).

3. A combination valve according to claim 1 or 2, **characterised in that** the non-return valve piston (8) is unable to slide in relation to the stopcock spindle (7) in the closed position of the stopcock (2), the shaft portion (11) being passed into the blind hole (12) to the maximum extent and/or a surface of the piston (8) radially surrounding the shaft portion (11) being brought into contact with the end of the spindle (7) against the force of the spring (22).

4. A combination valve according to claim 2 or 3, **characterised in that** the shaft portion (11) of the non-return valve piston (8) is configured with a cruciform cross-section, and the blind hole (12) in the stopcock spindle (7) is correspondingly formed for sliding receipt of the shaft portion (11).

5. A combination valve according to any one of the preceding claims, **characterised in that** a conical constriction of the passage which includes the seat (24) goes over into a planar seat (18), which planar seat (18) goes over into a conical constriction which includes the seat (19), which conical constriction, including the seat (19), in turn goes over into a cylindrical surface (21) closer to the inlet (5).

6. A combination valve according to any one of the preceding claims, **characterised in that** the gasket (16) is a rubber or elastomer gasket.

7. A combination valve according to any one of the preceding claims, **characterised in that** the non-return valve piston (8) and the stopcock spindle (7) are of a first material whilst the end plug (9) is of a second material having a lower melting point than the first material, such that if the water temperature in the combination valve (1) should, by mistake, exceed a given temperature, the end plug (9) will thus melt and prevent explosion in an attached water heater or in the combination valve (1).

8. A combination valve according to claim 7, **characterised in that** the first material is PPS plastic with 30% admixture of glass, and that the second material is PES plastic with 30% admixture of glass.

## Patentansprüche

1. Kombinationsventil (1) für eine Wasserheizung oder eine Rohrleitungs- und Heizungsanlage für eine Wohnung, wobei das Kombinationsventil (1) ein Ventilgehäuse (4), einen Absperrhahn (2) mit einer Absperrhahn-Spindel (7), ein Rückschlagventil (3) mit einem Rückschlagventilkolben (8), einem Einlass (5) und einem Auslass (6) aufweist, wobei die Absperrhahn-Spindel (7) und der Rückschlagventilkolben (8) mittig entlang einer gemeinsamen Längsachse des Ventils (1) angeordnet sind, wobei das Rückschlagventil eine Dichtung (16) zwischen dem Kolben (8) und dem Ventilgehäuse (4) aufweist; der Kolben (8) zum Dichtkontakt mit einem ersten Sitz (19), der einer Rückschlagventilfunktion dient, in dem Ventilgehäuse (4) federgetrieben (22) ist, und die Absperrhahn-Spindel (7) durch eine Öffnung hindurchgeschraubt in dem Ventilgehäuse (4) oder einem daran angebrachten Teil (9) zum Dichtkontakt zwischen dem Rückschlagventilkolben (8) und einem zweiten Sitz (24), der einer Absperrhahnfunktion dient, in dem Ventilgehäuse (4) aufgenommen ist, und welcher erste und zweite Sitz (19, 24) einen Durchgang zum Einlass (5) des Ventils (1) definieren, wobei der Rückschlagventilkolben (8) mittig und verschiebbar entlang der Längsachse zu einem Ende der Absperrhahn-Spindel (7) zum Dichtkontakt zwischen dem Rückschlagventilkolben (8) und dem ersten Sitz (19) in einer geschlossenen Stellung des Rückschlagventils (3) ist, und zusätzlich, zum Dichtkontakt zwischen dem Rückschlagventilkolben (8) und dem zweiten Sitz (24) in einer geschlossenen Stellung des Absperrhahns (2), in welcher die Dichtung (16) stärker zwischen dem Kolben (8) und dem Sitz (18) als in der geschlossenen Stellung nur für das Rückschlagventil (3) komprimiert ist, angeordnet ist, wobei der erste Sitz (19) weiter weg von dem Rückschlagventilkolben (8) entlang der Längsachse als der zweite Sitz (24) angeordnet ist, und der erste Sitz (19) radial innerhalb des zweiten Sitzes (24) bezüglich der zentralen Längsachse angeordnet ist, wobei die Dichtung (16) an dem Kolben (8) angebracht ist, **dadurch gekennzeichnet, dass** am gegenüberliegenden Ende des Wellenabschnitts (11) der Rückschlagventilkolben (8) mit einer radial angeordneten Nut ausgestaltet ist, in welcher die Dichtung (16) befestigt ist, wobei die Dichtung (16) kappenförmig ist, mit einer ebenen, kreisförmigen Kolbenfrontfläche, die in einen konischen abgerundeten Rand (15) zum Abdichten gegen den Sitz (19) übergeht, und welcher Rand (15) in eine ringförmige ebene Dichtungsfläche (17) zum Abdichten gegen den Sitz (18) übergeht, der in dem Ventilgehäuse (4) angeordnet ist, und welche ebene Dichtungsfläche (17) weiter in eine konische Fläche (23) zum Abdichten gegen den Sitz (24) übergeht, der in dem Ventilgehäuse (4) angeordnet ist.

2. Kombinationsventil nach Anspruch 1, **dadurch gekennzeichnet, dass** ein entlang der Längsachse mittig abstehender Wellenabschnitt (11) des Rückschlagventilkolbens (8) verschiebbar in einem mittigen Blindloch (22) im Ende der Absperrhahn-Spindel (7) angeordnet ist.

3. Kombinationsventil nach Anspruch 1 oder 2, **dadurch gekennzeichnet, dass** der Rückschlagventilkolben (8) bezüglich der Absperrhahn-Spindel (7) in der geschlossenen Stellung des Absperrhahns (2) nicht in der Lage ist, verschoben zu werden, wobei der Wellenabschnitt (11) in das Blindloch (12) weitestmöglich hineingeschoben ist und/oder eine Fläche des Kolbens (8), die den Wellenabschnitt (11) radial umgibt, mit dem Ende der Spindel (7) gegen die Kraft der Feder (22) in Kontakt gebracht ist.

4. Kombinationsventil nach Anspruch 2 oder 3, **dadurch gekennzeichnet, dass** der Wellenabschnitt (11) des Rückschlagventilkolbens (8) mit einem kreuzförmigen Querschnitt ausgestaltet und das Blindloch (12) in der Absperrhahn-Spindel (7) entsprechend für eine gleitende Aufnahme des Wellenabschnitts (11) ausgebildet ist.

5. Kombinationsventil nach einem der vorangehenden Ansprüche, **dadurch gekennzeichnet, dass** eine konische Verengung des Durchgangs, der den Sitz (24) aufweist, in einen flächigen Sitz (18) übergeht, wobei der flächige Sitz (18) in eine konische Verengung übergeht, die den Sitz (19) aufweist, wobei die konische Verengung, einschließlich des Sitzes (19), wiederum in eine zylindrische Fläche (21) näher am Einlass (5) übergeht.

6. Kombinationsventil nach einem der vorangehenden Ansprüche, **dadurch gekennzeichnet, dass** die Dichtung (16) eine Gummi- oder Elastomerdichtung ist.

7. Kombinationsventil nach einem der vorangehenden Ansprüche, **dadurch gekennzeichnet, dass** der Rückschlagventilkolben (8) und die Absperrhahn-Spindel (7) aus einem ersten Material bestehen, während der End-Stopfen (9) aus einem zweiten Material mit einem niedrigeren Schmelzpunkt als das erste Material ist, derart, dass, wenn die Wassertemperatur in dem Kombinationsventil (1) irrtümlich eine vorgegebene Temperatur übersteigt, der Endstopfen (9) dann schmilzt und eine Explosion in einer angeschlossenen Wasserheizung oder in dem Kombinationsventil (1) verhindert.

8. Kombinationsventil nach Anspruch 7, **dadurch gekennzeichnet, dass** das erste Material PPS-Kunststoff mit 30% Beimischung von Glas ist und dass das zweite Material PES-Kunststoff mit 30% Beimischung von Glas ist.

## Revendications

1. Vanne combinée (1) pour un chauffe-eau ou une installation de plomberie et de chauffage destinée à une habitation, laquelle vanne combinée (1) comprend un boîtier de vanne (4), un robinet d'arrêt (2) avec une tige de robinet d'arrêt (7), un clapet anti-retour (3) avec un piston de clapet anti-retour (8), une entrée (5) et une sortie (6), laquelle tige de robinet d'arrêt (7) et lequel piston de clapet anti-retour (8) sont agencés de manière centrale le long d'un axe longitudinal commun de la vanne (1), dans laquelle le clapet anti-retour comporte un joint (16) entre le piston (8) et le boîtier de vanne (4) ; le piston (8) est actionné par ressort (22) pour un contact d'étanchéité avec un premier siège (19), remplissant une fonction de clapet anti-retour, dans le boîtier de vanne (4), et la tige de robinet d'arrêt (7) est reçue de manière vissée à travers une ouverture dans le boîtier de vanne (4) ou une pièce (9) fixée à celui-ci pour un contact d'étanchéité entre le piston de clapet anti-retour (8) et un second siège (24), remplissant une fonction de robinet d'arrêt, dans le boîtier de vanne (4), et lesquels premier et second sièges (19, 24) définissent un passage vers l'entrée (5) de la vanne (1), le piston de clapet anti-retour (8) étant agencé de manière centrale et coulissante, le long de l'axe longitudinal, à une extrémité de la tige de robinet d'arrêt (7) pour un contact d'étanchéité entre le piston de clapet anti-retour (8) et le premier siège (19) dans une position fermée du clapet anti-retour (3) et, en outre, pour un contact d'étanchéité entre le piston de clapet anti-retour (8) et le second siège (24) dans une position fermée du robinet d'arrêt (2) dans laquelle le joint (16) est davantage comprimé entre le piston (8) et le siège (18) que dans la position fermée uniquement pour le clapet anti-retour (3), le premier siège (19) étant agencé plus éloigné du piston de clapet anti-retour (8) le long de l'axe longitudinal que le second siège (24), et le premier siège (19) étant agencé radialement à l'intérieur du second siège (24) par rapport à l'axe longitudinal central, le joint (16) étant fixé au piston (8), **caractérisée en ce qu'**au niveau de l'extrémité opposée de la partie d'arbre (11), le piston de clapet anti-retour (8) est configuré avec une rainure agencée radialement dans laquelle le joint (16) est fixé, le joint (16) étant en forme de chapeau, avec une face de piston circulaire plane qui se prolonge jusque dans un bord arrondi conique (15) pour une étanchéité contre le siège (19), et lequel bord (15) se prolonge jusque dans une surface d'étanchéité plane et annulaire (17) pour une étanchéité contre le siège (18) agencé dans le boîtier de vanne (4), et laquelle surface d'étanchéité plane (17) se prolonge jusque dans une surface conique (23) pour une étanchéité contre le siège (24) agencé dans le boîtier de vanne (4).

2. Vanne combinée selon la revendication 1, **caractérisée en ce qu'**une partie d'arbre (11) faisant saillie de manière centrale le long de l'axe longitudinal du piston de clapet anti-retour (8) est agencée de manière coulissante dans un trou aveugle central (22) à l'extrémité de la tige de robinet d'arrêt (7).

3. Vanne combinée selon la revendication 1 ou 2, **caractérisée en ce que** le piston de clapet anti-retour (8) ne peut coulisser par rapport à la tige de robinet d'arrêt (7) dans la position fermée du robinet d'arrêt (2), la partie d'arbre (11) étant poussé dans le trou aveugle (12) au maximum et/ou une surface du piston (8) entourant radialement la partie d'arbre (11) étant amenée en contact avec l'extrémité de la tige (7) à l'encontre de la force du ressort (22).

4. Vanne combinée selon la revendication 2 ou 3, **caractérisée en ce que** la partie d'arbre (11) du piston de clapet anti-retour (8) est configurée avec une section transversale cruciforme, et le trou aveugle (12) dans la tige de robinet d'arrêt (7) est formé de manière correspondante pour la réception coulissante de la partie d'arbre (11).

5. Vanne combinée selon l'une quelconque des revendications précédentes, **caractérisée en ce qu'**un rétrécissement conique du passage qui comprend le siège (24) se prolonge jusque dans un siège plan (18), lequel siège plan (18) se prolonge jusque dans un rétrécissement conique qui comprend le siège (19), lequel rétrécissement conique, y compris le siège (19), se prolonge à son tour jusque dans une surface cylindrique (21) plus proche de l'entrée (5).

6. Vanne combinée selon l'une quelconque des revendications précédentes, **caractérisée en ce que** le joint (16) est un joint en caoutchouc ou en élastomère.

7. Vanne combinée selon l'une quelconque des revendications précédentes, **caractérisée en ce que** le piston de clapet anti-retour (8) et la tige de robinet d'arrêt (7) sont en un premier matériau, tandis que le bouchon d'extrémité (9) est en un second matériau ayant un point de fusion inférieur au premier matériau, de telle sorte que si la température de l'eau dans la vanne combinée (1) dépasse, par erreur, une température donnée, le bouchon d'extrémité (9) va ainsi fondre et empêcher une explosion dans un chauffe-eau associé ou dans la vanne combinée (1).

8. Vanne combinée selon la revendication 7, **caractérisée en ce que** le premier matériau est du plastique PPS avec un mélange de verre à 30 %, et **en ce que** le second matériau est du plastique PES avec un mélange de verre à 30 %.
